# EUROPEAN PATENT SPECIFICATION

(11) **EP 1 045 578 B1**
(45) Date of publication and mention of the grant of the patent: **20.08.2003**
(21) Application number: 00302082.3
(22) Date of filing: 15.03.2000
(51) Int. Cl.: H04N 5/217

(54) **Filtering of defective picture elements in digital imagers**
Filterung defekter Bildelemente bei digitalen Bildgebern
Filtrage d'éléments d'image défecteux dans des capteurs d'images numérique

(30) Priority: 15.03.1999 US 124408 P; 30.12.1999 US 475652; 15.03.1999 US 124538 P
(43) Date of publication of application: 18.10.2000
(73) Proprietor: Texas Instruments Incorporated, Dallas, Texas 75251 (US)
(72) Inventor: Chen, Zhiliang Julian,, Plano, Texas 75093, (US); Dierschke, Eugene G.,, Dallas, Texas 75248, (US); Clynes, Steven Derek,, Allen, Texas 75002 (US); Liu, Anli,, Plano, Texas 75024, (US)
(74) Representative: Legg, Cyrus James Grahame

(56) References cited:
- EP-A- 0 440 563
- EP-A- 0 496 573
- US-A- 4 541 116
- US-A- 4 833 723
- US-A- 5 392 070

## Description

This invention relates generally to digital imaging devices and specifically to techniques and circuits for the filtering of defective picture elements. The term pixels is used below to mean picture elements.

Digital imaging devices are becoming increasingly popular in a variety of applications, including digital cameras, fingerprint recognition, digital scanners and copiers, and the like. Typical prior art digital imaging devices are based on charge coupled device (CCD) technology. CCD devices have an array of CCD cells, each cell comprising a pixel. Each CCD pixel outputs a voltage signal in proportion to the intensity of light impinging upon the cell. This analog voltage signal can be converted to a digital signal for further processing, digital filtering, storage and the like. As is well known in the art, a two dimensional digital image can be constructed from the voltage signals output from a two-dimensional array of CCD cells, commonly referred to as a sensor array.

CCD arrays have a shortcoming in that CCD fabrication requires a special process that is not compatible with standard CMOS processes. Thus, the CCD array cannot be easily integrated with other logic circuits, such as CCD control logic, analog to digital converters and the like. Additionally, in operation, a CCD array requires multiple high voltage supplies from 5V to 12V and CCD arrays tend to consume a large amount of power in use.

An alternative to CCD arrays is using an array formed of CMOS cells. A CMOS sensor array can be fabricated using standard CMOS processing and thus can be integrated onto a single chip with other circuits, such as array control logic, analog to digital converters (A/D's), digital signal processing (DSP) cores and the like. CMOS arrays provide the additional advantage of operating with a single low supply voltage such as 3.3V or 5V, and consuming less power than a comparable CCD array. Finally, a CMOS array can be fabricated at a lower cost than a similar CCD array.

One common problem with both CCD and with CMOS imaging devices is that of point defects which cause "spot noise" on the image, such as white spots on a dark portion of the image or a dark spot on a white portion of the image. In CMOS imaging devices, white spots are due to pixels (i.e. CMOS cells) with excessive leakage current. Dark spots are due to either particles covering the pixel or a defect in the pixel electronics causing the pixel not to turn on. Spot noise seriously limits the yield of CMOS imaging devices, resulting in increased costs.

One method to remove spot noise electronically has been proposed by Younse et al. in U.S. Patent 4,805,023. The Younse et al. implementation requires expensive EPROM memory and involves a complicated hardware system, further increasing the cost of the imaging device. Furthermore, the solution proposed by Younse et al. cannot remove temperature dependent spot noise, such as white spots appearing only at high temperatures.

European Patent Application No 0 496 573 discloses a picture element defect removing circuit which selects a picture element and its adjacent picture elements in an M x N block where the minimum value of M and N is 2, determines the maximum and minimum values among the adjacent picture elements and whether, from the maximum and minimum values, two arbitrary threshold values and the value of the selected picture element, a change is required in the value of the selected picture element. The picture element defect removing circuit performs several compare-and-select operations in determining a value for use as the selected picture element and is correspondingly complex.

Therefore, a need exists for a relatively inexpensive filter that can quickly and reliably filter out the effects of defective pixels, including spot noise, from an image signal.

The invention is as defined in claims 1 or 24. It is provided a filter for filtering an image which includes a plurality of picture elements each represented by a luminance or a chrominance value, including:
means including a three-picture-element window for selecting a picture element and its two adjacent picture elements in a picture element data stream,
means for determining whether the selected picture element lies between the two adjacent picture elements in value,
means for determining whether the selected picture element differs in value from both of the two adjacent picture elements by more than a set amount,
means for replacing the selected picture element, in value, by a value dependent on the two adjacent picture elements, when, in value, the selected picture element does not lie between the two adjacent picture elements and differs from both of the two adjacent picture elements by more than the set amount and
means for repeating the procedure for the new selected picture element.

One embodiment of the invention is a digital imaging device comprising a substrate, a sensor array formed on the substrate, the array generating an electrical signal corresponding to the amount of light impinging upon the array, and imaging logic formed on the substrate, coupled to the sensor array and receiving the electrical signal. The imaging logic includes an analog to digital converter receiving the electrical signal and outputting digital pixel values and a defective pixel filter receiving the digital pixel values and detecting defective pixels on the basis of variations between a selected pixel value and its neighboring pixel values.

Another embodiment of the invention is a digital imager comprising a lens mechanism, a sensor array positioned within a focal plane of said lens mechanism, and an analog buffer and amplifier coupled to an output of said sensor array, and imaging logic coupled to said amplifier. The imaging logic includes a defective pixel filter comprising means for detecting whether a first pixel is outside an acceptable range defined by luminance values of first and second neighboring pixels, means for determining whether said first pixel deviates from said first neighboring pixel by greater than a threshold value and means for determining whether said first pixel deviates from said second neighboring pixel by greater than a threshold value, means for calculating a corrected pixel value, and means for substituting said corrected pixel value for said first pixel if said first pixel is outside said acceptable range and said first pixel deviates from said first neighboring pixel by greater than a threshold value and said first pixel deviates from said second neighboring pixel by greater than a threshold value.

The invention also provides a method of filtering an image including a plurality of picture elements each represented by a luminance or a chrominance value, including the steps of:
selecting a picture element and its two adjacent picture elements from a pixel data stream by three-picture-element window means,
determining whether the selected picture element lies, in value, between the two adjacent picture elements,
determining whether the selected picture element differs, in value, from both of the two adjacent picture elements by more than a set amount and
when the selected picture element does not lie, in value, between the two adjacent picture elements and differs from both of the two adjacent picture elements by more than the set amount and
repeating the procedure for the new selected picture element.

A method is provided for detecting a defective pixel based upon the luminance values generated by the pixel and its two nearest neighbors. The method includes determining a first difference value between the luminance value of the pixel and the luminance value of a first neighboring pixel and comparing the first difference value to a pre-determined threshold value. The method also includes determining a second difference value between the luminance of the pixel and the luminance value of a second neighboring pixel and comparing the second difference value to the pre-determined threshold value. Finally, the method includes detecting whether the luminance value for the pixel falls within an acceptable range defined by the luminance value for the first neighboring pixel and the luminance value for the second neighboring pixel and identifying the pixel as defective if the luminance value for the pixel does not fall within the acceptable range and neither the first difference value nor the second difference value is less than or equal to the threshold value.

The above features of the present invention will be more clearly understood from consideration of the following descriptions in connection with accompanying drawings in which:
Figure 1 illustrates a digital imaging device in which preferred embodiments of the invention may be employed;
Figure 2 is a block diagram of a preferred embodiment single chip CMOS imaging device;
Figures 3a through 3j illustrate various acceptable and unacceptable variations between neighboring pixels and
Figures 4a through 4c illustrate the preferred embodiment filter of defective pixels operating as a moving window of analysis;
Figure 5 schematically illustrates a first preferred embodiment circuit for filtering out defective pixels and
Figure 6 illustrates a portion of a color sensor array.

The making and use of the various embodiments are discussed below in detail. However, it should be appreciated that the present invention provides many applicable inventive concepts which can be embodied in a wide variety of specific contexts. The specific embodiments discussed are merely illustrative of specific ways to make and use the invention, and do not limit the scope of the invention.

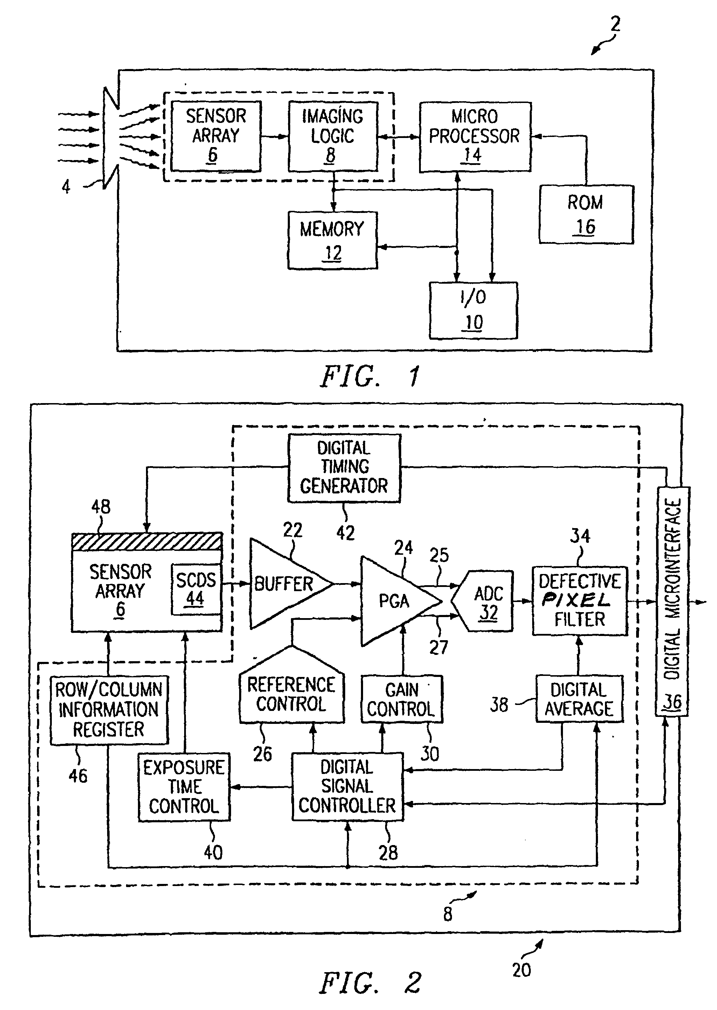

Figure 1 illustrates a digital imaging device 2 utilizing preferred embodiments of the present invention. Digital imaging device 2 includes a lens mechanism 4 which receives light emanating or reflected from an object to be imaged and focuses the incoming light upon an array sensor 6. The array sensor 6 is preferably a CMOS sensor array of the type fully described in co-pending patent application 09/223,166, entitled Fast Frame Readout Architecture for Array Sensors with Integrated Correlated Double Sampling System . As will be known to one skilled in the art, the sensor array 6 is comprised of a two dimensional array of CMOS sensors, each sensor corresponding to a pixel of the resulting image. Each sensor outputs an analog voltage signal, which signal is in proportion to the intensity of light impinging upon the particular sensor. The voltage signal from each sensor can be scanned in a raster format as is well known in the art to generate an analog image signal. This analog image signal is fed to imaging logic 8 where the analog signal is buffered and amplified before being converted to a digital signal. The digital signal can be filtered or further processed before being passed to an input / output (IO) port 10 in the form of pixel intensity data. Alternatively, with additional signal processing, the digital signal can be output in the form of a bitmap or other well known digital picture format.

Alternatively, the digital signal can be passed to a memory 12 for storage. The memory 12 is preferably a dynamic random access memory or a static random access memory. Alternatively, the memory 12 could be a magnetic or optical storage device, such as a magnetic diskette device, a CD-ROM, or other storage device. In each case, an appropriate device controller and interface (not shown) would be included along with the memory 12. The imaging logic 8, memory 12, and I/O port 10 are preferably under the control of a microprocessor 14, which is preferably a general purpose digital microprocessor operating under instructions stored in the memory 12 or a ROM 16. Stored instructions could also be provided via the I/O port 10 directly to the microprocessor 14 or stored in the memory 12 or the ROM 16.

In the preferred embodiment, the sensor array 6 is formed of an array of CMOS sensor cells, thus allowing for the imaging logic 8 to be formed using CMOS processes on a single integrated circuit along with the sensor array 6. Figure 2 illustrates a single integrated circuit (IC) 20, upon which is realized both the sensor array 6 and the imaging logic 8 according to the preferred embodiment of the invention. Other features and circuits may be included within the IC 20 including internal control registers, microprocessor interface logic, memory interface logic and the like. These features have not been illustrated as they are not necessary for an understanding of the present invention.

Further details of the imaging logic 8 will now be described with reference to Figure 2. The main path for imaging signals is indicated by heavy arrows. The analog signal from the sensor array 6 is passed to the buffer 22 where the signal is buffered to strengthen the signal and fixed pattern noise is removed. From the buffer 22 the buffered analog signal is sent to a first input of a programmable gain differential amplifier 24. The second input of the amplifier 24 receives a reference voltage V_{REF}, which is fed from a reference control block 26 under the control of a digital signal controller 28. The amplifier 24 also receives a gain control signal from the gain control block 30, which operates under the control of a digital signal controller 28.

The amplifier 24 maps the two inputs to fully differential outputs 25 and 27. In other words, the outputs 25 and 27 correspond to the difference between the value of the two input signals (i.e. the analog image signal and the reference voltage V_{REF}) multiplied by the gain value and centered about a common mode voltage level. These fully differential outputs 25 and 27 are then fed to the inputs of a differential analog to digital converter 32 where the differential value (i.e. the difference between the signals 25 and 27) is converted to a digital value. The resulting digital image signal is then passed to a defective-pixel filter 34 where image errors are detected and corrected, as described in detail below.

The corrected digital image signal is then passed to a digital micro-interface 36 which provides an interface between the IC 20 and other components of the digital imager 2, such as the memory 12, microprocessor 14 or I/O port 10.

Also shown in Figure 2 is a digital timing generator 42 which provides timing signals for operation of a sequential correlated doubling sampling block 44 in order to suppress CMOS sensor fixed pattern noise. A row / column information register 46 provides information to the digital signal controller 28 and a digital average calculator 38 regarding where the signal currently being processed originated on the sensor array (i.e. provides row and column information for each pixel). The imaging logic 8 also includes a digital signal feedback loop comprising the digital average calculator 38, digital signal controller 28, reference control block 26, gain control block 30 and exposure time control 40. This feedback loop is employed to provide for optical black calibration and for resolution enhancement by adjusting the reference voltage and gain for the amplifier 24.

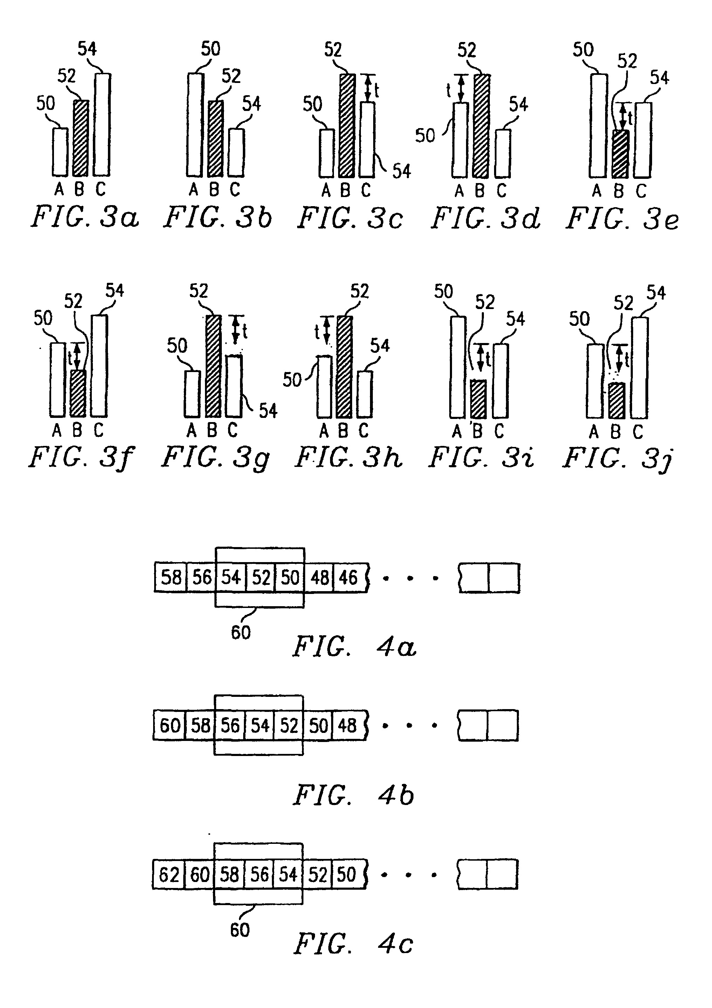

Further details regarding the design and operation of the defective-pixel filter 34 will now be discussed. Referring first to Figures 3a through 3j, each drawing illustrates a group of three neighboring pixels in the image signal. The pixels are illustrated as bars, which bars correspond to the luminance value for the given pixel. For instance in Figure 3a, the pixel B 52 has a luminance value greater than that of the pixel A 50 and the pixel C 54 has a luminance value greater than that of the pixel B. The pixels A, B and C correspond to three adjacent pixels in the CMOS array 6. Under normal circumstances, one would not expect abrupt discontinuities in the change in luminance values. For instance, as the image changes from dark to light, the pattern shown in Figure 3a, with the pixels having increasing values, would be expected. Likewise, in Figure 3b, the pixel B 52 is darker than the pixel A 50 and the pixel C 54 is darker than the pixel B 52 - indicating a normal transition from light to dark. Note that in both Figures 3a and 3b, the luminance for the middle pixel B 52 falls in the range of values defined by the luminance for its neighboring pixels A 50 and C 54. By contrast, in Figure 3c, the middle pixel B 52 has a luminance that is greater than the luminance of both of its neighbors 50 and 54, indicating a discontinuity in the luminance trend for the image. Note, however, that the pixel B 52 of Figure 3c deviates from its nearest neighbor pixel C 54 by an amount t. The value t indicates a threshold deviation between neighboring pixels that can be tolerated before the middle pixel will be considered as defective. Likewise, in Figures 3d through 3f, even though the luminance of the middle pixel B 52 does not fall between the luminance of its neighboring pixels A 50 and C 54, the deviation from the nearest pixel value is equal to or less than t. By contrast, in Figures 3g through 3j the luminance value for the middle pixel B 52 does not fall within the range of values between the neighboring pixels A 50 and C 54, and also deviates from the value of the nearest pixel by more than the threshold amount t. Under the circumstances illustrated in Figures 3g through 3j, the pixel B 52 will be considered to be defective.

In practice a row of pixels forming the image will be scanned with a moving three-pixel window as shown in Figures 4a through 4b. A pixel data stream preferably consists of 10-bit luminance values for each pixel of the CMOS array 6, which stream is fed to the defective-pixel filter 34. The defective-pixel filter 34 applies a moving window 60 across the pixel data stream as it passes through the filter. In Figure 4a, the first three pixels 50, 52, 54 of the stream are analyzed, with the pixel 52 being the middle pixel B under consideration (as illustrated, pixel data is moving from right to left). In Figure 4b, the moving window 60 has shifted one pixel or, more accurately, the pixels moving through defective-pixel filter 34 have shifted by one pixel, and the pixels 52, 54, and 56 are then analyzed, with the pixel 54 being the middle pixel B under consideration. Finally, in Figure 4c, the moving window has again shifted by one pixel and the pixels 54, 56, and 58 are analyzed, with the pixel 56 being the middle pixel B under consideration.

In the event that the pixel B under consideration is determined to fall outside the range of luminance values of its neighboring pixels A and C, and to deviate from its nearest neighboring pixel by more than the threshold t, then that pixel will be flagged as defective. In the preferred embodiments, the luminance value for the defective pixel will be replaced with an interpolated luminance value based upon the values of the neighboring pixels A and C.

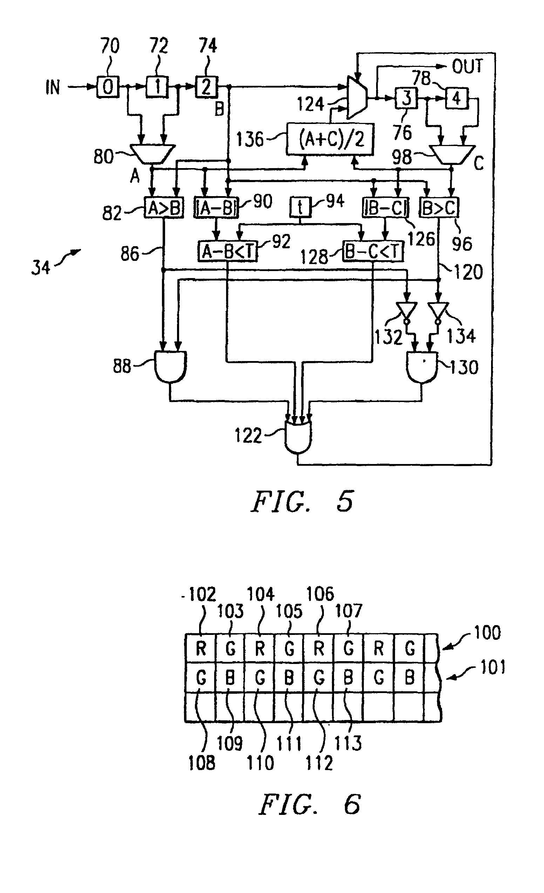

Further details regarding the defective-pixel filter 34 is provided with reference to Figure 5. The incoming pixel data is fed to a first in first out (FIFO) register comprising register cells 70, 72, 74, 76, and 78. While the preferred embodiment provides for the advantageous feature that defective pixels are identified and corrected for in real-time without the need for large memory storage, other embodiments might provide for a DRAM, SRAM or other type of memory in which the incoming pixel data is fed and stored. Note that five pixels are loaded into the FIFO registers even though only three pixels are analyzed at one time. This is because the defective-pixel filter 34 can be configured for both monochrome images and for color images. As is known in the art, color image sensors interlace the pixel sensors on each row in a Bayer pattern, as is illustrated in Figure 6, which illustrates a portion of a color image sensor. In the first row 100 of the array, red sensors 102, 104, 106 are interlaced with green sensors 103, 105, 107. In the second row 101, green sensors 108, 110, 112 are interlaced with blue sensors 109, 111, and 113. Clearly it is desirable to compare adjacent pixels of the same type (i.e. comparing red pixels to red pixels). For this reason, every other pixel should be selected for analysis, for instance pixels 102, 104, and 106 would be analyzed to determine if the pixel 104 was defective. Next, the pixel 105 would be compared to like pixels 103 and 107. Otherwise, if the (green) value for the pixel 103 was compared to the (red) values of pixels 102 and 104, it would be very likely to have abrupt discontinuities, even though the pixel 103 was functioning normally. For instance, for a portion of the image in which the image was primarily red, pixels 102 and 104 would be expected to have high luminance values and the pixel 103 would be expected to have very low luminance values.

Therefore, in the monochrome mode, the pixel A is selected from the register 72, the pixel B is selected from the register 74 and the pixel C is selected from the register 76. In the color mode, the pixel A is selected from register 70, the pixel B is selected from the register 74, and the pixel C is selected from the register 78, in order to ensure that like pixels are being compared.

A multiplexer 80 selects the pixel A from either the register 72 or from the register 70 depending on whether the device is in the monochrome or color mode, and feeds the pixel value to a comparator 82. In the comparator 82, the value of the pixel A is compared to the value of the pixel B from the register 74. If the comparison indicates that the pixel A has a greater value than the pixel B, a valid logic signal (logical high) is asserted on a signal line 86, which is connected to one input of a two-input AND gate 88. The other input to the AND gate 88 is fed from the comparator 96 wherein the value for the pixel B is compared to the value for the pixel C. The pixel C is selected by a multiplexer 98 from either the register 78 or the register 76, depending upon whether the device is in the monochrome or color mode. If the pixel B is greater in value than the pixel C, then the comparator 96 will assert a valid signal on a signal line 120, which is fed to the second input of the AND gate 88. If both inputs to the AND gate 88 are high (indicating that A is greater than B and B is greater than C), the AND gate 88 will assert a valid signal (logical high) to a four-input OR gate 122. This condition corresponds to the situation illustrated graphically in Figure 3b, which is an acceptable situation indicating that the pixel B is valid. The logical OR gate 122 will assert a valid signal (logical high) to a multiplexer 124, which will in turn allow the value for the pixel B, from the register 74, to be output from the defective-pixel filter 34 for further processing. Note that for convenience, a logical high signal will be treated as indicating a valid signal, although in other embodiments, a logical low signal could be used for a valid logic signal.

At the same time, the difference in the values of the pixel A and the pixel B is calculated in a block 90 and the difference is compared to the threshold t in a comparator 92. Note that the value for the threshold t can be selected by a user and stored in a register 94. Alternatively, or if no value for t is selected by the user, a default value for t can be stored in the register 94. In some embodiments, the threshold value can be automatically generated based upon an iterative process in which a feedback signal indicative of image quality is compared to a varying value for t until a threshold value is reached that effectively cancels out defective pixels without canceling out desired luminance variations that occur naturally in the image.

If the difference between the pixels A and B is less than or equal to the threshold, this also indicates that the pixel B is valid, corresponding to the condition in Figures 3d or 3f. Note that it does not matter whether the pixel B is greater than or less than the pixel A, as long as the difference is less than or equal to the threshold. If so, then the comparator 92 will output a logical high to the OR gate 122, which will also cause the multiplexer 124 to allow the pixel B to be passed.

Likewise, if the difference between the pixels B and C is less than or equal to the threshold value, corresponding to Figure 3c or 3e, than the pixel B is valid (regardless of the difference in value between the pixels A and B). This condition is determined by a block 126 and a comparator 128 and if the difference between pixels the B and C is less than t, a logical high is asserted to an OR gate 122 and the value for the pixel B is passed to the output from the register 74 via a multiplexer 124.

The fourth input of the OR gate 122 is fed from an AND gate 130. The first input to the AND gate 130 is the inverted output of the comparator 82 (via an inverter 132) and the second input is the inverted output of the comparator 96 (via an inverter 134). The AND gate 130 will output a valid signal (logical high) to the OR gate 122 when the pixel C is greater in value than the pixel B and the pixel B is greater in value than the pixel A. This corresponds to Figure 3a.

If none of the above conditions is met, the inputs to the OR gate 122 will be logical lows, and hence the control input to the multiplexer 124 will be a logical low. This indicates that the pixel B is defective (corresponding to one of the conditions of Figures 3g through 3j). Under those circumstances, the multiplexer 124 will pass a corrected pixel B value to the output. This corrected pixel value is calculated in a block 136. In the preferred embodiments, the corrected pixel B value is calculated from the average value of its neighboring pixels A and C, in other words B_{corrected} = (A + C) / 2. The advantage of using a simple interpolation between the pixels A and C is that those values are already stored in the FIFO register. More complex interpolations could be employed to generate the value for B_{corrected}, such as using the values of the nearest two or three neighbors on either side of B, but such interpolations would require additional storage elements in which the neighboring pixel values are stored and would also require additional combinational logic (with its associated costs and real estate requirements).

In the preferred embodiments, the circuit of Figure 5 is realized in combinational logic on a semiconductor chip using CMOS fabrication processes. Advantageously, the preferred embodiment filter is fabricated on the same chip as the sensor array, as provided for with a CMOS sensor array. While other types of arrays such as CCD array may also be used, they may not be as desirable for reasons of processing differences. In other embodiments, the function could be achieved by a microprocessor running a sequence of program instructions. Alternatively, the circuitry could be realized in programmable gate array logic or other programmable logic.

As will be apparent from the above description, the preferred embodiments provide several advantageous features including the ability to eliminate temperature and time dependent pixel defects and the ability to filter both white pixels and dark pixels with adjustable thresholds. The adjustable threshold feature allows compensation for image spatial frequency and for degree of array pixel defects. Additionally, the preferred embodiments operate at high speed in real time and do not require a frame or line memory to store an entire frame or line of data. Both the logic and the sensor array can be formed on a single chip and are compatible with CMOS operations. The method can be employed as a part of a wafer probe operation in order to determine wafer yield and is operable in either color or monochrome image modes. The described embodiments maintain high frequency edge components, such as a rapid transition from a dark to very bright object, or from a bright to dark object.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. A filter for filtering an image which includes a plurality of picture elements each represented by a luminance or a chrominance value, including:
means (70,72,74,76,78,80,98) for selecting a window consisting of only three picture elements including a picture element and its two adjacent picture elements in a picture element data stream,
means (82,96) for determining whether the selected picture element lies between the two adjacent picture elements in value,
means (90,92,94,126,128) for determining whether the selected picture element differs in value from both of the two adjacent picture elements by more than a set amount,
means (88,122,124,130,136) for replacing the selected picture element, in value, by a value dependent on the two adjacent picture elements, when, in value, the selected picture element does not lie between the two adjacent picture elements and differs from both of the two adjacent picture elements by more than the set amount and
means for repeating the procedure for further picture elements serving as the selected picture element.

2. A filter as claimed in claim 1, including means (70,72,74,76,78,122,124,136) for replacing the selected picture element, in value, by an average of the values of the two adjacent picture elements.

3. A filter as claimed in claim 1, including means for replacing the selected picture element, in value, by an interpolated value dependent on the values of the two adjacent picture elements.

4. A filter as claimed in any one of claims 1 to 3 comprising:
a first comparator circuit (80) for receiving as input a first picture element value and a second picture element value and outputting a valid logic signal to a first input of an AND circuit (88) and to a first inverter (132) when the first picture element value is greater than the second picture element value,
a first difference calculator (90) for receiving as input said first picture element value and said second picture element value and outputting to a first input of a second comparator circuit (92) a first difference value corresponding to the difference between said first and second picture element values;
said second comparator circuit (92) also for receiving as input a threshold value and outputting a valid logic signal to a first input of an OR (122) circuit when the first difference value is less than or equal to the set amount;
a third comparator circuit (96) for receiving as input said second picture element value and a third picture element value and outputting a valid logic signal to a second input of said first AND circuit (88) and to a second inverter (134) when the second picture element value is greater than the third picture element value and
a second difference calculator (126) for receiving as input said second picture element value and said third picture element value and outputting a second difference value corresponding to the difference between said second and third picture element values to a first input of a fourth comparator circuit (128),
said fourth comparator circuit (128) also for receiving as input the threshold value and outputting a valid logic signal to a third input of said OR circuit (122) when the second difference value is less than or equal to the set amount and
a second AND circuit (130) coupled to said first and second inverters (132,134) and having an output coupled to a fourth input of said OR circuit (122).

5. A filter as claimed in claim 4 further comprising:
a corrected picture element calculation block (136) for receiving as input said first and third picture element values and outputting a corrected picture element value,
a multiplexer (124) having a first input coupled to the output of said corrected picture element calculation block (136) and receiving as a second input said picture element value and having a control input coupled to an output of said OR circuit (122).

6. A filter as claimed in any one of claims 1 to 5, further comprising registers (70,72,74,76,78) for storing picture element values.

7. A filter as claimed in any one of claims 4 to 6, capable of operating in both monochrome and color mode and further comprising:
at least one multiplexer (80,98) for receiving as input the picture element values stored in at least two registers (70,72,74) and outputting one of said picture element values in response to an indication of monochrome or color mode operation.

8. A filter as claimed in any one of claims 4 to 7, wherein said first, second, and third picture element values are ten bit digital values.

9. A filter as claimed in any one of claims 1 to 8, further comprising a threshold value register (94) for storing the said threshold value.

10. A filter as claimed in claim 9, including means permitting a user to enter the threshold value in the threshold value register.

11. A filter as claimed in claim 9, including means for providing the threshold value from a feedback signal indicative of image quality.

12. A filter as claimed in any one of claims 4 to 8, wherein said comparator circuits (82,92,96,128), difference calculators (90,126) and registers (70,72,74,76,78) are fabricated with CMOS processes.

13. A filter as claimed in any one of claims 1 to 12, including a general purpose microprocessor (14).

14. A digital imaging device including a filter as claimed in any one of claims 1 to 13 comprising:
a substrate,
a sensor array (6) formed on the substrate, the sensor array (6) generating an electrical signal corresponding to the amount of light impinging upon the sensor array (6) and
imaging logic formed on the substrate, coupled to the sensor array (6) and receiving the electrical signal, the imaging logic including an analog-to-digital converter (32) receiving the electrical signal and outputting digital picture element values.

15. A digital imaging device as claimed in claim 14, further comprising a buffer store (22) wherein said picture element values are stored.

16. A digital imaging device as claimed in claim 14 or claim 15, wherein the filter operates in real time.

17. A digital imaging device as claimed in any one of claim 14 to 16, wherein the sensor array (6) is comprised of CMOS cells.

18. A digital imager including a filter as claimed in any one of claims 1 to 13 comprising:
a lens mechanism (4),
a sensor array (6) positioned within a focal plane of said lens mechanism (4),
an analog buffer (22) and amplifier (24) coupled to an output of said sensor array (6) and
imaging logic coupled to said amplifier (24), the filter being included in the said imaging logic.

19. A digital imager as claimed in claim 18, wherein said sensor array (6) and said imaging logic are fabricated on a single integrated circuit.

20. A digital imager as claimed in claim 18 or 19, wherein the sensor array (6) is comprised of CMOS cells.

21. A digital imager as claimed in claim 18 or 19, wherein the sensor array (6) is comprised of CCD cells.

22. A digital imager as claimed in any one of claims 18 to 21, wherein the imaging logic includes combinational logic.

23. A digital imager as claimed in any one of claims 18 to 22, wherein the imaging logic includes a microprocessor (14).

24. A method of filtering an image including a plurality of picture elements each represented by a luminance or a chrominance value, including the steps of:
selecting a window consisting of only three picture elements, including a picture element and its two adjacent picture elements from a pixel data stream by three-picture-element window means,
determining whether the selected picture element lies, in value, between the two adjacent picture elements,
determining whether the selected picture element differs, in value, from both of the two adjacent picture elements by more than a set amount and
when the selected picture element does not lie, in value, between the two adjacent picture elements and differs from both of the two adjacent picture elements by more than the set amount and
repeating the procedure for the new selected picture element.

25. A method as claimed in claim 24 comprising:
determining a first difference value between the luminance value of the selected picture element and the luminance value of a first neighboring picture element,
comparing the first difference value to the set amount,
determining a second difference value between the luminance of the selected picture element and the luminance value of a second neighboring picture element,
comparing the second difference value to the set amount,
detecting whether the luminance value for the selected picture element falls within an acceptable range defined by the luminance value for the first neighboring picture element and the luminance value for the second neighboring picture element and
identifying the selected picture element as defective if the luminance value for the selected picture element does not fall within the acceptable range and neither the first difference value nor the second difference value is less than or equal to the set amount.

26. The method as claimed in claim 24 or claim 25, wherein an average of the luminance value of the first neighboring picture element and the luminance value of the second neighboring picture element replaces the selected picture element in value.

27. A method as claimed in claim 24 or claim 25, wherein an interpolated value taking account of two or more neighboring picture elements on either side of the selected picture element replaces the selected picture element in value.

28. A method as claimed in any one of claims 24 to 27, wherein the set amount is entered in a register by a user.

29. A method as claimed in any one of claims 24 to 27, wherein the set amount is determined from a feedback signal indicative of image quality.

30. A method as claimed in any one of claims 24 to 29, performed in real time.

## Patentansprüche

1. Filter zum Filtern eines Bildes, das mehrere Bildelemente enthält, wovon jedes durch einen Luminanz- oder einen Chrominanzwert repräsentiert wird, mit:
Mitteln (70, 72, 74, 76, 78, 80, 98), die in einem Bildelement-Datenstrom ein Fenster auswählen, das aus nur drei Bildelementen besteht, die ein Bildelement und seine zwei benachbarten Bildelemente enthalten,
Mitteln (82, 96), die bestimmen, ob das ausgewählte Bildelement seinem Wert nach zwischen den zwei benachbarten Bildelementen liegt,
Mitteln (90, 92, 94, 126, 128), die bestimmen, ob sich das ausgewählte Bildelement seinem Wert nach von den beiden benachbarten Bildelementen um mehr als einen bestimmten Betrag unterscheidet,
Mitteln (88, 122, 124, 130, 136), die das ausgewählte Bildelement seinem Wert nach durch einen Wert ersetzen, der von den zwei benachbarten Bildelementen abhängt, wenn das ausgewählte Bildelement seinem Wert nach nicht zwischen den zwei benachbarten Bildelementen liegt und sich von den beiden benachbarten Bildelementen um mehr als den bestimmten Betrag unterscheidet, und
Mitteln, die die Prozedur für weitere Bildelemente, die als das ausgewählte Bildelement dienen, wiederholen.

2. Filter nach Anspruch 1, das Mittel (70, 72, 74, 76, 78, 122, 124, 136) enthält, die das ausgewählte Bildelement seinem Wert nach durch einen Mittelwert der Werte der zwei benachbarten Bildelemente ersetzen.

3. Filter nach Anspruch 1, das Mittel enthält, die das ausgewählte Bildelement seinem Wert nach durch einen interpolierten Wert ersetzen, der von den Werten der zwei benachbarten Bildelemente abhängt.

4. Filter nach einem der Ansprüche 1 bis 3, mit:
einer ersten Komparatorschaltung (80), die als Eingang einen ersten Bildelementwert und einen zweiten Bildelementwert empfängt und ein gültiges logisches Signal an einen ersten Eingang einer UND-Schaltung (88) und an einen ersten Inverter (132) ausgibt, wenn der erste Bildelementwert größer als der zweite Bildelementwert ist,
einem ersten Differenzrechner (90), der als Eingang den ersten Bildelementwert und den zweiten Bildelementwert empfängt und an einen ersten Eingang einer zweiten Komparatorschaltung (92) einen ersten Differenzwert ausgibt, der der Differenz zwischen dem ersten und dem zweiten Bildelementwert entspricht;
wobei die zweite Komparatorschaltung (92) außerdem als Eingang einen Schwellenwert empfängt und ein gültiges logisches Signal an einen ersten Eingang einer ODER-Schaltung (122) ausgibt, wenn der erste Differenzwert kleiner oder gleich dem bestimmten Betrag ist;
einer dritten Komparatorschaltung (96), die als Eingang den zweiten Bildelementwert und einen dritten Bildelementwert empfängt und ein gültiges logisches Signal an einen zweiten Eingang der ersten UND-Schaltung (88) und an einen zweiten Inverter (134) ausgibt, wenn der zweite Bildelementwert größer als der dritte Bildelementwert ist, und
einem zweiten Differenzrechner (126), der als Eingang den zweiten Bildelementwert und den dritten Bildelementwert empfängt und einen zweiten Differenzwert, der der Differenz zwischen dem zweiten und dem dritten Bildelementwert entspricht, an einen ersten Eingang einer vierten Komparatorschaltung (128) ausgibt,
wobei die vierte Komparatorschaltung (128) außerdem als Eingang den Schwellenwert empfängt und ein gültiges logisches Signal an einen dritten Eingang der ODER-Schaltung (122) ausgibt, wenn der zweite Differenzwert kleiner oder gleich dem bestimmten Betrag ist, und
einer zweiten UND-Schaltung (130), die mit dem ersten und dem zweiten Inverter (132, 134) gekoppelt ist und einen mit einem vierten Eingang der ODER-Schaltung (122) gekoppelten Ausgang besitzt.

5. Filter nach Anspruch 4, ferner mit:
einem Berechnungsblock (136) für korrigierte Bildelemente, der als Eingang den ersten und den dritten Bildelementwert empfängt und einen korrigierten Bildelementwert ausgibt,
einem Multiplexer (124), der mit einem ersten Eingang mit dem Ausgang des Berechnungsblocks (136) für korrigierte Bildelemente gekoppelt ist und als einen zweiten Eingang den Bildelementwert empfängt und mit einem Steuereingang mit einem Ausgang der ODER-Schaltung (122) gekoppelt ist.

6. Filter nach einem der Ansprüche 1 bis 5, das ferner Register (70, 72, 74, 76, 78) zum Speichern von Bildelementwerten umfaßt.

7. Filter nach einem der Ansprüche 4 bis 6, das sowohl in einem Monochrom- als auch in einem Farbmodus arbeiten kann und ferner umfaßt:
wenigstens einen Multiplexer (80, 98), der als Eingang die in wenigstens zwei Registern (70, 72, 74) gespeicherten Bildelementwerte empfängt und in Reaktion auf eine Angabe eines Monochrom- oder Farbmodus-Betriebs einen der Bildelementwerte ausgibt.

8. Filter nach einem der Ansprüche 4 bis 7, bei dem der erste, der zweite und der dritte Bildelementwert jeweils digitale Werte aus zehn Bits sind.

9. Filter nach einem der Ansprüche 1 bis 8, das ferner ein Schwellenwertregister (94) zum Speichern des Schwellenwertes umfaßt.

10. Filter nach Anspruch 9, mit Mitteln, die einem Anwender ermöglichen, den Schwellenwert in das Schwellenwertregister einzugeben.

11. Filter nach Anspruch 9, mit Mitteln, die den Schwellenwert aus einem die Bildqualität angebenden Rückkopplungssignal bereitstellen.

12. Filter nach einem der Ansprüche 4 bis 8, bei dem die Komparatorschaltungen (82, 92, 96, 128), die Differenzrechner (90, 126) und die Register (70, 72, 74, 76, 78) in CMOS-Prozessen gefertigt sind.

13. Filter nach einem der Ansprüche 1 bis 12, das einen Universal-Mikroprozessor (14) umfaßt.

14. Digitale Bilderzeugungsvorrichtung, die ein Filter nach einem der Ansprüche 1 bis 13 enthält, mit:
einem Substrat,
einer Sensormatrix (6), die auf dem Substrat ausgebildet ist und ein elektrisches Signal erzeugt, das der auf die Sensormatrix (6) auftreffenden Lichtmenge entspricht, und
einer Bilderzeugungslogik, die auf dem Substrat ausgebildet ist, mit der Sensormatrix (6) gekoppelt ist und das elektrische Signal empfängt, wobei die Bilderzeugungslogik einen Analog/Digital-Umsetzer (32) enthält, der das elektrische Signal empfängt und digitale Bildelementwerte ausgibt.

15. Digitale Bilderzeugungsvorrichtung nach Anspruch 14, die ferner einen Pufferspeicher (22) umfaßt, in dem die Bildelementwerte gespeichert sind.

16. Digitale Bilderzeugungsvorrichtung nach Anspruch 14 oder Anspruch 15, bei der das Filter in Echtzeit arbeitet.

17. Digitale Bilderzeugungsvorrichtung nach einem der Ansprüche 14 bis 16, bei der die Sensormatrix (6) CMOS-Zellen umfaßt.

18. Digitale Abbildungsvorrichtung, die ein Filter nach einem der Ansprüche 1 bis 13 enthält, mit:
einem Linsenmechanismus (4),
einer Sensormatrix (6), die in einer Brennebene des Linsenmechanismus (4) positioniert ist,
einem analogen Puffer (22) und einem Verstärker (24), die mit einem Ausgang der Sensormatrix (6) gekoppelt sind, und
einer Abbildungslogik, die mit dem Verstärker (24) gekoppelt ist, wobei das Filter in der Abbildungslogik enthalten ist.

19. Digitale Abbildungsvorrichtung nach Anspruch 18, bei der die Sensormatrix (6) und die Abbildungslogik auf einer einzigen integrierten Schaltung gefertigt sind.

20. Digitale Abbildungsvorrichtung nach Anspruch 18 oder 19, bei der die Sensormatrix (6) CMOS-Zellen umfaßt.

21. Digitale Abbildungsvorrichtung nach Anspruch 18 oder 19, bei der die Sensormatrix (6) CCD-Zellen umfaßt.

22. Digitale Abbildungsvorrichtung nach einem der Ansprüche 18 bis 21, bei der die Abbildungslogik eine kombinatorische Logik umfaßt.

23. Digitale Abbildungsvorrichtung nach einem der Ansprüche 18 bis 22, bei der die die Abbildungslogik einen Mikroprozessor (14) umfaßt.

24. Verfahren zum Filtern eines Bildes, das mehrere Bildelemente umfaßt, wovon jedes durch einen Luminanz- oder einen Chrominanzwert repräsentiert wird, mit den folgenden Schritten:
Auswählen eines Fensters, das aus nur drei Bildelementen besteht, die ein Bildelement und dessen zwei benachbarte Bildelemente enthalten, aus einem Bildelementdatenstrom durch ein Dreibildelement-Fenstermittel,
Bestimmen, ob das ausgewählte Bildelement seinem Wert nach zwischen den zwei benachbarten Bildelementen liegt,
Bestimmen, ob das sich ausgewählte Bildelement seinem Wert nach von beiden benachbarten Bildelementen um mehr als einen bestimmten Betrag unterscheidet, und
wenn das ausgewählte Bildelement seinem Wert nach nicht zwischen den zwei benachbarten Bildelementen liegt und sich von den beiden benachbarten Bildelementen um mehr als den bestimmten Betrag unterscheidet, und
Wiederholen der Prozedur für das neu ausgewählte Bildelement.

25. Verfahren nach Anspruch 24, das umfaßt:
Bestimmen eines ersten Differenzwerts zwischen dem Luminanzwert des ausgewählten Bildelements und dem Luminanzwert des ersten benachbarten Bildelements,
Vergleichen des ersten Differenzwerts mit dem bestimmten Betrag,
Bestimmen eines zweiten Differenzwerts zwischen dem Luminanzwert des ausgewählten Bildelements und dem Luminanzwert eines zweiten benachbarten Bildelements,
Vergleichen des zweiten Differenzwerts mit dem bestimmten Betrag,
Feststellen, ob der Luminanzwert für das ausgewählte Bildelement in einen annehmbaren Bereich fällt, der durch den Luminanzwert für das erste benachbarte Bildelement und durch den Luminanzwert für das zweite benachbarte Bildelement definiert ist, und
Bestimmen des ausgewählten Bildelements als fehlerhaft, falls der Luminanzwert für das ausgewählte Bildelement nicht in den annehmbaren Bereich fällt und weder der erste Differenzwert noch der zweite Differenzwert kleiner oder gleich dem bestimmten Betrag ist.

26. Verfahren nach Anspruch 24 oder Anspruch 25, bei dem das ausgewählte Bildelement seinem Wert nach durch den Durchschnitt aus dem Luminanzwert des ersten benachbarten Bildelements und aus dem Luminanzwert des zweiten benachbarten Bildelements ersetzt wird.

27. Verfahren nach Anspruch 24 oder Anspruch 25, bei dem ein interpolierter Wert, der zwei oder mehr benachbarte Bildelemente auf jeder Seite des ausgewählten Bildelements berücksichtigt, das ausgewählte Bildelement seinem Wert nach ersetzt.

28. Verfahren nach einem der Ansprüche 24 bis 27, bei dem der bestimmte Betrag von einem Anwender in ein Register eingegeben wird.

29. Verfahren nach einem der Ansprüche 24 bis 27, bei dem der bestimmte Betrag aus einem die Bildqualität angebenden Rückkopplungssignal bestimmt wird.

30. Verfahren nach einem der Ansprüche 24 bis 29, das in Echtzeit ausgeführt wird.

## Revendications

1. Filtre pour filtrer une image qui inclut une pluralité d'éléments d'image représentés chacun par une valeur de luminance et une valeur de chrominance, comprenant:
des moyens (70, 72, 74, 76, 78, 80, 98) pour sélectionner une fenêtre constituées de seulement trois éléments d'image, incluant un élément d'image et ses deux éléments d'image adjacents dans un flux de données d'éléments d'image,
des moyens (82, 96) pour déterminer si l'élément d'image sélectionné est situé, en valeur, entre les deux éléments d'image adjacents,
des moyens (90, 92, 94, 126, 128) pour déterminer si l'élément d'image sélectionné diffère en valeur des deux éléments d'image adjacents, et ce de plus d'une quantité réglée ou prédéterminée,
des moyens (88, 122, 124, 130, 136) pour remplacer l'élément d'image sélectionné, en valeur, par une valeur qui dépend des deux éléments d'image adjacents lorsque, en valeur, l'élément d'image sélectionné n'est pas situé entre les deux éléments d'image adjacents et diffère des deux éléments d'image adjacents d'une quantité supérieure à la quantité réglée, et
des moyens pour répéter la procédure pour d'autres éléments d'image utilisés en tant qu'élément d'image sélectionné.

2. Filtre selon la revendication 1, comprenant des moyens (70, 72, 74, 76, 78, 122, 124, 136) pour remplacer l'élément d'image sélectionné, en valeur, par une moyenne des valeurs des deux éléments d'image adjacents.

3. Filtre selon la revendication 1, comprenant des moyens pour remplacer l'élément d'image sélectionné, en valeur, par une valeur interpolée en fonction des valeurs des deux éléments d'image adjacents.

4. Filtre selon l'une quelconque des revendications 1 à 3, comprenant:
un premier circuit comparateur (80) pour recevoir en tant qu'entrée une première valeur d'élément d'image et une seconde valeur d'élément d'image et délivrer un signal logique valable à une première entrée d'un circuit ET (88) et à un premier inverseur (132) lorsque la première valeur d'élément d'image est supérieure à la seconde valeur d'élément d'image,
un premier calculateur de différence (90) pour recevoir comme entrée la première valeur d'élément d'image et ladite seconde valeur d'élément d'image et délivrer à une première entrée d'un second circuit comparateur (92) une première valeur de différence correspondant à la différence entre lesdites première et seconde valeurs d'éléments d'image;
ledit second circuit comparateur (92) servant également à recevoir comme entrée une valeur de seuil et délivrer un signal logique valable à une première entrée d'un circuit OU (122) lorsque la première valeur de différence est inférieure ou égale à la quantité réglée;
un troisième circuit comparateur (96) pour recevoir en tant qu'entrée, ladite seconde valeur d'élément d'image et une troisième valeur d'élément d'image et délivrer un signal logique valable à une seconde entrée dudit premier circuit ET (88) et à un second inverseur (134) lorsque la seconde valeur d'élément d'image est supérieure à la troisième valeur d'élément d'image, et
un second calculateur de différence (126) pour recevoir en tant qu'entrée ladite seconde valeur d'élément d'image et ladite troisième valeur d'élément d'image et délivrer une seconde valeur de différence correspondant à la différence entre lesdites seconde et troisièmes valeurs d'éléments d'image à une première entrée d'un quatrième circuit comparateur (128),
ledit quatrième circuit comparateur (128) servant également à recevoir en tant qu'entrée la valeur de seuil et délivrer un signal logique valable à une troisième entrée dudit circuit OU (122) lorsque la seconde valeur de différence est inférieure ou égale à la quantité réglée, et
un second circuit ET (130) couplé auxdits premier et second inverseurs (132, 134) et comportant une sortie couplée à une quatrième entrée dudit circuit OU (122).

5. Filtre selon la revendication 4, comprenant en outre:
un bloc (136) de calcul d'éléments d'image corrigés pour recevoir comme entrée lesdites première et troisième valeurs d'éléments d'image et délivrer une valeur d'élément d'image corrigée,
un multiplexeur (124) possédant une première entrée couplée à la sortie dudit bloc (136) de calcul d'éléments d'image corrigés et recevant comme seconde entrée ladite valeur d'élément d'image et comportant une entrée de commande couplée à une sortie dudit circuit OU (122).

6. Filtre selon l'une quelconque des revendications 1 à 5, comprenant en outre des registres (70, 72, 74, 76, 78) pour mémoriser des valeurs d'éléments d'image.

7. Filtre selon l'une quelconque des revendications 4 à 6, apte à fonctionner à la fois en mode monochrome et en mode couleurs et comprenant:
au moins un multiplexeur (80, 98) pour recevoir comme signal d'entrée les valeurs d'éléments d'image mémorisées dans au moins deux registres (70, 72, 74) et délivrer l'une desdites valeurs d'éléments d'image en réponse à une indication d'un fonctionnement en mode monochrome ou en mode couleurs.

8. Filtre selon l'une quelconque des revendications 4 à 7, dans lequel lesdites première, seconde et troisième valeurs d'éléments d'image sont des valeurs numériques à dix bits.

9. Filtre selon l'une quelconque des revendications 1 à 8, comprenant en outre un registre à valeur de seuil (84) pour mémoriser ladite valeur de seuil.

10. Filtre selon la revendication 9, comprenant des moyens permettant à l'utilisateur d'introduire la valeur de seuil dans le registre à valeur de seuil.

11. Filtre selon la revendication 9, comprenant des moyens pour délivrer la valeur de seuil à partir d'un signal de réaction ou rétroaction indicatif de la qualité de l'image.

12. Filtre selon l'une quelconque des revendications 4 à 8, dans lequel lesdits circuits comparateurs (82, 92, 96, 128), les dispositifs de calcul de différence (90, 126) et les registres (70, 72, 74, 76, 78) sont réalisés au moyen de procédés CMOS.

13. Filtre selon l'une quelconque des revendications 1 à 12, incluant un microprocesseur à usage général (14).

14. Dispositif d'imagerie numérique incluant un filtre selon l'une quelconque des revendications 1 à 13, comprenant:
un substrat;
un réseau ou matrice de capteurs (6) formés sur le substrat, le réseau de capteurs (6) produisant un signal électrique correspondant à la quantité de lumière incidente frappant le réseau de capteurs (6), et
une logique d'imagerie formée sur le substrat, couplée au réseau de capteurs (6) et recevant le signal électrique, la logique d'imagerie comprenant un convertisseur analogique/numérique (32) recevant le signal électrique et délivrant des valeurs d'éléments d'image numériques.

15. Dispositif d'imagerie numérique selon la revendication 14, comprenant en outre une mémoire tampon (22), dans laquelle lesdites valeurs d'éléments d'image sont mémorisées.

16. Dispositif d'imagerie numérique selon la revendication 14 ou la revendication 15, dans lequel le filtre fonctionne en temps réel.

17. Dispositif d'imagerie numérique selon l'une quelconque des revendications 14 à 16, dans lequel le réseau de capteurs (6) est formé de cellules CMOS.

18. Imageur numérique incluant un filtre selon l'une quelconque des revendications 1 à 13, comprenant:
un système à lentille (4),
un réseau de capteurs (6) positionné dans un plan focal dudit système à lentille (4),
un tampon analogique (22) et un amplificateur (24) couplé à une sortie dudit réseau de capteurs (6) et
une logique d'imagerie couplée audit amplificateur (24), le filtre étant inclus dans ladite logique d'imagerie.

19. Imageur numérique selon la revendication 18, dans lequel ledit réseau de capteurs (6) et ladite logique d'imagerie sont formés sur un seul circuit intégré.

20. Imageur numérique selon la revendication 18 ou 19, dans lequel le réseau de capteurs (6) est formé de cellules CMOS.

21. Imageur numérique selon la revendication 18 ou 19, dans lequel le réseau de capteurs (6) est constitué de cellules CCD.

22. Imageur numérique selon l'une quelconque des revendications 18 à 21, dans lequel la logique d'imagerie inclut une logique combinatoire.

23. Imageur numérique selon l'une quelconque des revendications 18 à 22, dans lequel la logique d'imagerie inclut un microprocesseur (14).

24. Procédé pour filtrer une image incluant une pluralité d'éléments d'image représentés chacun par une valeur de luminance ou une valeur de chrominance, incluant les étapes consistant à:
sélectionner une fenêtre constituée uniquement de trois éléments d'image incluant un élément d'image et les deux éléments d'image qui lui sont adjacents à partir d'un flux de données de pixels à l'aide de moyens formant fenêtres à trois éléments d'image,
déterminer si l'élément d'image sélectionné est situé, en valeur, entre les deux éléments d'image adjacents,
déterminer si l'élément d'image sélectionné diffère, en valeur, des deux éléments d'image adjacents, de plus d'une quantité réglée, et
lorsque l'élément d'image sélectionné n'est pas situé, en valeur, entre les deux éléments d'image adjacents et diffère des deux éléments d'image adjacents de plus de la quantité réglée, et
répéter la procédure pour le nouvel élément d'image sélectionné.

25. Procédé selon la revendication 24, comprenant:
la détermination d'une première valeur de différence entre la valeur de luminance de l'élément d'image sélectionné et la valeur de luminance d'un premier élément d'image voisin,
la comparaison la première valeur de différence à la quantité réglée,
la détermination d'une seconde valeur de différence entre la luminance de l'élément d'image sélectionné et la valeur de luminance d'un second élément d'image voisin,
la comparaison de la seconde valeur de différence à la quantité réglée,
la détection du fait que la valeur pour l'élément d'image sélectionné se situe ou non dans une gamme admissible définie par la valeur de luminance pour le premier élément d'image voisin et la valeur de luminance pour le second élément d'image voisin, et
l'identification de l'élément d'image sélectionné comme étant défectueux si la valeur de luminance pour l'élément d'image sélectionné ne tombe pas dans la gamme admissible et si ni la première valeur de différence, ni la seconde valeur de différence ne sont inférieures ou égales à la quantité réglée.

26. Procédé selon la revendication 24 ou la revendication 25, selon lequel une moyenne de la valeur de luminance du premier élément d'image voisin et de la valeur de luminance du second élément d'image voisin remplace l'élément d'image sélectionné, en valeur.

27. Procédé selon la revendication 24 ou la revendication 25, selon lequel une valeur interpolée prenant en compte les deux éléments d'image voisins ou un plus grand nombre d'éléments d'image voisins de chaque côté de l'élément d'image sélectionné remplace l'élément d'image sélectionné, en valeur.

28. Procédé selon l'une quelconque des revendications 24 à 27, selon lequel la quantité réglée est introduite dans un registre par un utilisateur.

29. Procédé selon l'une quelconque des revendications 24 à 27, selon lequel la quantité réglée est déterminée à partir d'un signal de réaction indicatif de la qualité de l'image.

30. Procédé selon l'une quelconque des revendications 24 à 29, exécuté en temps réel.
